# EUROPÄISCHE PATENTSCHRIFT

(11) **EP 3 197 758 B1**
(45) Veröffentlichungstag und Bekanntmachung des Hinweises auf die Patenterteilung: **24.10.2018**
(21) Anmeldenummer: 15756558.1
(22) Anmeldetag: 26.08.2015
(51) Int. Cl.: B62D 35/00

(54) **VERFORMBARE UND VERSTELLBARE HECKSPOILEREINRICHTUNG FÜR EIN FAHRZEUG**
DEFORMABLE AND MOVABLE REAR SPOILER DEVICE FOR A VEHICLE
SYSTÈME DE BECQUET ARRIÈRE DÉFORMABLE ET RÉGLABLE POUR VÉHICULE

(30) Priorität: 23.09.2014 DE 102014113780
(43) Veröffentlichungstag der Anmeldung: 02.08.2017
(73) Patentinhaber: WABCO Europe BVBA, 1170 Brussels (BE)
(72) Erfinder: DIECKMANN, Thomas, 30982 Pattensen (DE); DOHNAL, Dalibor, 763 14 Zlin 12 (CZ); GENCASLAN, Umut, 30419 Hannover (DE); KADLEC, Miroslav, 760 01 Zlin (CZ); RAJCH, Zdenek, 760 01 Zlin (CZ); RAMIREZ, Luis, NL-2774 PJ Voorburg (NL); VACULIK, Tomás, 763 02 Zlin (CZ); VAN RAEMDONCK, Gandert Marcel Rita, NL-2611 PW Delft (NL); VAN RAEMDONCK, Hjalmar Luc Maria, B-2930 Brasschaat (BE)
(74) Vertreter: Lauerwald, Jörg
(86) Internationale Anmeldenummer: PCT/EP2015/001736
(87) Internationale Veröffentlichungsnummer: WO 2016/045767

(56) Entgegenhaltungen:
- WO-A1-2012/174617
- DE-A1-102009 014 860
- DE-A1-102011 122 292
- DE-A1-102011 122 299
- DE-A1-102012 021 862

## Beschreibung

Die Erfindung betrifft eine Heckspoilereinrichtung für ein Fahrzeug, insbesondere einen Lkw, wobei das Fahrzeug mindestens eine Hecktüre, insbesondere zwei nach hinten und außen aufschwingende Hecktüren, aufweist, die insbesondere von der geschlossenen Fahrstellung aus um mehr als 180°, z. B. etwa 250°, nach vorne schwenkbar sind, um sie an Seitenwänden eines kastenförmigen Aufbaus des Fahrzeugs anzulegen und ggf. zu arretieren.

Derartige Fahrzeuge mit im Wesentlichen kastenförmigem Aufbau weisen somit zwei Seitenwände, ein Dach und ein das Dach und die Seitenwände nach hinten stumpf bzw. im Wesentlichen rechtwinklig abschließendes Heck auf. Aufgrund der Abrisskante durch das stumpfe Heck sind die aerodynamischen Eigenschaften ungünstig; hierzu sind Heckspoilereinrichtungen zur Verbesserung dieser Eigenschaften bekannt.

Die US 2004/0119319 A1 zeigt ein Fahrzeug mit einer derartigen Heckspoilereinrichtung. Die Dach-Luftleitelemente verlängern die Dachfläche des Fahrzeugs nach hinten und können nach innen eingefaltet werden. Weiterhin sind Seiten-Luftleitelemente vorgesehen, um die Seitenfläche des LKW nach hinten aerodynamisch zu verlängern. Die Verstelleinrichtung wird an den Hecktüren angebracht, so dass sie im eingefahrenen Zustand mit den Hecktüren wegschwenken kann und den Laderaum freigibt. Durch die Anbringung an der Hecktüre ergibt sich ein Absatz zwischen der Fahrzeugstruktur und der vorderen Kante der Dach-Luftleitelemente.

Im eingefalteten Zustand verbleibt jedoch im Allgemeinen eine sperrige Anordnung, die nach hinten absteht, z. B. durch die Faltlinien und die mechanischen Elemente der Verstelleinrichtung. Hierdurch wird weiterhin auch ein vollständiges Öffnen der Hecktüre um 270° nach vorne zur Anlage an der Seitenwand behindert.

Die US 2007/0126261 A1 zeigt eine weitere Heckspoilereinrichtung, die an den Seitenwänden des Fahrzeugs angebracht wird und eine Faltung in Fahrzeug-Längsrichtung ermöglicht; die Heckspoilereinrichtung füllt die gesamte Heckfläche des Fahrzeugs aus.

Die US 4,682,808 B beschreibt eine Heckspoilereinrichtung, die durch mehrere vertikale und horizontale Luftleitelemente ausgebildet wird, die an unterschiedlichen Stellen des Heckbereichs angebracht werden. Als Stand der Technik wird eine Heckspoilereinrichtung mit einem Dach-Luftleitelement gezeigt, das lediglich in einem inneren Bereich vorgesehen ist und an der Dachfläche montiert wird, so dass es sich nach hinten über den Heckbereich erstreckt; die lateral angrenzenden Flächen werden von dem Dach- Luftleitelement nicht erfasst. Derartige Luftleitelemente sind jedoch aufwändig am Dach oder der Fahrzeugstruktur zu montieren und ermöglichen im Allgemeinen kein einfaches Öffnen der Hecktüre.

Die US 7,537,270 B2 zeigt eine Heckspoilereinrichtung mit Dach-Luftleitelement und Seiten-Luftleitelementen, die unterschiedliche Formgebungen aufweisen können und zum Teil zur Montage an der Hecktüre vorgesehen sind.

Eine schwenkbare oder verstellbare Anordnung von Luftleitelementen ist weiterhin auch in der gattungsgemäßen DE 10 2009 014 860 A1, oder in der DE 20 2009 014 476 U1, DE 20 2009 014 510 U1, DE 20 2009 015 009 U1 und DE 102 286 58 A1 gezeigt. Die Anbringung der Luftleitelemente erfolgt hierbei oftmals im Scharnierbereich, so dass spezifische Scharnier-Ausbildungen erforderlich sind. Weiterhin sind die einsetzbaren Luftleitelemente im Allgemeinen in ihrer Länge begrenzt, insbesondere wenn die Hecktüre um etwa 270° nach vorne aufgeschwenkt werden soll. Die Bedienung und Verstellung derartiger Verstellsysteme ist oftmals aufwändig.

Der Erfindung liegt die Aufgabe zugrunde, eine Heckspoilereinrichtung zu schaffen, die mit relativ geringem Aufwand ausbildbar ist und eine sichere Verstellbarkeit ermöglicht.

Diese Aufgabe wird durch eine Heckspoilereinrichtung nach Anspruch 1 gelöst. Die Unteransprüche beschreiben bevorzugte Weiterbildungen.

Das Luftleitelement ist somit in einem in seiner lateralen Richtung äußeren Bereich derartig flexibel elastisch, dass es in der eingefahrenen bzw. eingefalteten Grundstellung verformbar ist.

Die laterale Richtung ist hierbei die Erstreckungsrichtung seiner Anlagekante, bei einem Dach- Luftleitelement somit die Querrichtung oder Y-Richtung des Fahrzeugs und bei einem Seiten- Luftleitelement die vertikale Richtung oder Z-Richtung. Der lateral äußere Bereich liegt in lateraler Richtung außen, d.h. zu einer Außenfläche des Fahrzeugs hin. Bei einem Dach-Luftleitelement ist der lateral äußere Bereich somit der zur Seitenwand hin weisende Bereich.

Die Anlagekante liegt vorzugsweise direkt an der Außenfläche an, gegebenenfalls mit einer Dichtung in einem eventuell ausgebildeten Zwischenraum zu der Außenfläche.

In der ausgefahrenen Fahrstellung weist das Luftleitelement somit eine hinreichende Steifigkeit auf, so dass es seine Form zur aerodynamischen Konturverlängerung wahrt. In der Grundstellung ermöglicht es insbesondere Verstellungen, die zu einer Deformation des Luftleitelementes führen, insbesondere beim Öffnen und Vorklappen der Hecktüre nach vorne.

Der Erfindung liegt hierbei die Erkenntnis zu Grunde, dass insbesondere der Scharnier-Bereich der Hecktüre beim Vorklappen der Hecktüre problematisch ist und bei Ermöglichung gezielter Deformationen ein Vorklappen erleichtert wird. Die Deformation wird durch einen mehrschichtigen Aufbau des Luftleitelementes ermöglicht.

Erfindungsgemäß wird erkannt, dass ein derartiger Schichtaufbau einige Vorteile aufweist:
Lediglich die obere Schicht weist die Leitfläche auf und ist daher in ihrer Formgebung für die aerodynamischen Eigenschaften relevant.

Bei dem mehrschichtigen Aufbau kann die mindestens eine untere Schicht somit gezielt derartig ausgebildet werden, dass sie die Steifigkeit und Verformbarkeit des mehrschichtigen Aufbaus beeinflusst. So kann ein Vorteil insbesondere durch eine andere Formgebung, d. h. eine gewölbte Formgebung erreicht werden, wobei zunächst eine Verformungsreserve und Verformbarkeit ermöglicht wird, so dass der äußere Bereich verformbar ist, ohne durch die Verformung bleibende Schäden, z. B. ein Abbrechen oder eine bleibende Deformation zu erleiden. Die Verformung führt somit vorteilhafterweise zu einer relativen Verstellung der Schichten zueinander statt zu einer Materialbeschädigung. Durch den mehrschichtigen Aufbau mit der gewölbten unteren Schicht kann weiterhin die Elastizität bzw. Federsteifigkeit erhöht werden, so dass die untere Schicht z. B. wie ein Federelement zur Spannung bzw. zum Aufbau einer Feder-Rückstellkraft für die obere Schicht wirkt.

Bei der Deformation des äußeren Bereichs knickt somit vorzugsweise die obere Schicht plan um, und die untere Schicht knickt unter Änderung ihrer Wölbung und unter Ausbildung einer Federrückstellkraft um.

Vorteilhafterweise verjüngt sich ein Abstand zwischen den Schichten in der lateralen Richtung nach außen, bei einem Dach-Luftleitelement somit zur Seitenwand hin.

An Außenkante kann das Dach-Luftleitelement durch eine Dichtung abgeschlossen werden.

Die Wölbung der unteren Schicht in dem lateral äußeren Bereich erstreckt sich vorzugsweise in Längsrichtung, d.h. von der Anlagekante zum hinteren Ende hin. Beim Umklappen der Hecktüre kann diese Wölbung dann umklappen, vorzugsweise in einer Klappebene, die sich selbsttätig ausbildet. Derartige Umklappvorgänge sind z. B. bei gebogenen Metallbändern wie z. B. Maßbändern bekannt, die aufgrund ihrer gewölbten Form eine hohe Steifigkeit aufweisen und ohne Beschädigung reversibel umklappen können. Die obere, plane Schicht legt sich lediglich plan um.

Die beiden Schichten sind in dem äußeren Bereich vorzugsweise nicht miteinander verbunden, so dass die untere Schicht beim Umklappen sich in Längsrichtung ausdehnen kann. Indem die beiden Schichten in dem inneren Bereich miteinander verbunden sind, wird auch eine definierte Klappebene kurz außerhalb der Einfassung ermöglicht.

Somit wird durch den mehrschichtigen Aufbau mit Verformungsreserve zum einen eine hohe Elastizität und Rückstellkraft erreicht, und zum anderen eine Verformbarkeit ohne Beschädigung ermöglicht, ohne dass aufwändige oder teure Materialien oder Zusatzeinrichtungen erforderlich sind.

Weiterhin können die verschiedenen Schichten auch jeweils mit geeigneten Materialien, d. h. auch unterschiedlichen Materialien, ausgebildet werden. Sowohl die obere Schicht als auch die untere Schicht sind vorteilhafterweise aus Kunststoff-Materialien gefertigt.

Der äußere Bereich kann sich somit elastisch verformen, wobei er sich beim Vorschwenken der Hecktüre an die Seitenwand bzw. den Bereich von Fahrzeugstruktur und Seitenwand anpassen kann, d.h. als Ganzes oder mit variabler Verformung einknickt.

Der mehrschichtiger Aufbau mit der oberen Schicht und einer unteren, ggf. mehrlagigen Schicht, führt gegenüber einer dickeren einteiligen Ausbildung zu keinen deutlich erhöhten Materialkosten, da die einzelnen Schichten gegenüber einer einteiligen Ausbildung entsprechend dünner gewählt werden können. Die ggf. gewölbte oder konkave Formgebung unterhalb der oberen Schicht ist hierbei für die aerodynamischen Eigenschaften nicht relevant, da sie sozusagen "im Windschatten" aerodynamischer Strömung liegt, und kann daher gezielt geformt und positioniert werden, und sich den Platzverhältnissen anpassen.

Das Luftleitelement kann insbesondere ein Dach-Luftleitelement sein, dessen vordere Anlagekante an eine hintere Kante der Dachfläche oder der an die Dachfläche anschließenden Fahrzeugstruktur anschließt, wobei das Dach-Luftleitelement in seiner Längsrichtung nach hinten plan oder auch gekrümmt sein kann.

Die untere Schicht kann in dem lateral äußerenBereich in Längsrichtung z. B. mit einer großen Wölbung bzw. konkav gekrümmt oder auch wellenförmig gekrümmt verlaufen. Vorzugsweise ist die untere Schicht nur in dem lateral inneren Bereich mit der oberen Schicht verbunden und ansonsten gegenüber der oberen Schicht verstellbar, insbesondere in Längsrichtung und der Richtung ihrer Dicke. Der Zwischenraum bzw. die Kavität zwischen den Schichten ist vorzugsweise nicht abgedichtet und daher im Allgemeinen mit Luft gefüllt.

Die eingefahrene Grundstellung des Dach-Luftleitelementes wird insbesondere durch flaches Anlegen an die Hecktüre erreicht. Beim nachfolgenden Vorklappen der Hecktüre passt sich der flexible bzw. verformbare äußere Bereich insbesondere auch der Formgebung in den Scharnierbereichen bzw. im Bereich nahe der Tür-Schwenkachse reversibel an. Somit sind insbesondere Hecktür-Ausbildungen möglich, die Scharnierausbildungen aufweisen, um einen Schwenkvorgang der Türe von der geschlossenen Stellung um fast 270°, z. B. etwa 250°, nach vorne zu unterstützen und eine Anbindung der Hecktüre an der Seitenwand zu ermöglichen. Somit wird eine Heckspoilerausbildung ermöglicht, die eine volle Funktionsfähigkeit in der ausgefahrenen Fahrstellung, eine flache Anlage in der Grundstellung mit geringem Verstellaufwand und ein vollständiges Vorklappen der Hecktüre ermöglicht.

Die Ausbildung des Dach-Leitelementes wirkt in besonderer Weise synergistisch mit einer Verstelleinrichtung zusammen, die nicht lediglich ein Klappen des Dach-Luftleitelementes um eine vordere Schwenkachse nach unten vorsieht, sondern einen Schwenkvorgang mit zeitweisem Längsverstellen des Dach-Luftleitelementes vorsieht. Gemäß einer bevorzugten Ausbildung ist hierzu ein Viergelenk-Getriebe vorgesehen, das eine Verstellung von der eingefahrenen Grundstellung durch Ausschwenken nach hinten und nachfolgendem Vorschwenken des vorderen Endes des Dach- Luftleitelementes an das Fahrzeug bewirkt. Somit ermöglicht eine derartige Verstelleinrichtung auch Formgebungen der vorderen Kante bzw. des vorderen Endes des Dach-Luftleitelementes, die bei einer reinen Klappung des Dach- Luftleitelementes um eine feste Rotationsachse nicht möglich sind.

Ein derartiges Viergelenk-Getriebe kann z. B. mit einer großen und einer kleinen Schwinge ausgebildet sein, die vertikal versetzt an der Hecktüre angebracht werden, in ihrer Grundstellung flach an der Hecktüre anliegen und in ihrer Fahrstellung nach hinten ausgefahren sind und somit das Dach-Luftleitelement geeignet abstützen.

Somit wird eine kostengünstige und mit geringen Fahrzeug-Aufwand ausbildbare Heckspoilereinrichtung mit sicherer Verstellung zwischen Grundstellung und ausgefahrener Stellung, insbesondere mit einer Zwangsführung, und geeigneter Formgebung des Dach-Luftleitelementes ermöglicht, um eine flache Anlage auch in der eingefahrenen Grundstellung zu ermöglichen.

Die Erfindung wird im Folgenden anhand der beiliegenden Zeichnungen an einigen Ausführungsformen näher erläutert. Es zeigen:
- Fig. 1: einen Lkw mit einer Heckspoilereinrichtung gemäß einer Ausführungsform in Fahrstellung, in Rückansicht;
- Fig. 2: das Detail A aus Fig. 1;
- Fig. 3: eine perspektivische Ansicht des rechten Teils der Heckspoilereinrichtung;
- Fig. 4: eine schematisierte Seitenansicht zur Darstellung der Rückströmung während der Fahrt;
- Fig. 5: eine Aufsicht auf den Lkw bei nach vorn geklappter rechter Hecktüre;
- Fig. 6: eine Vergrößerung des Details B aus Fig. 5;
- Fig. 7: eine Ausführungsform einer Verstelleinrichtung mit Vier-Gelenk-Getriebe in mehreren Stellungen;
- Fig. 8: schematisiert den Schichtaufbau des Luftleitelementes;
- Fig. 9: eine perspektivische Ansicht der Heckspoilereinrichtung mit Schnittebene;
- Fig. 10: den Ausschnitt D aus Fig. 9 mit mehreren alternativen Profilausbildungen;
- Fig. 11: das Dach-Luftleitelement aus Fig. 9 mit drei Schnitten und den Profildarstellungen in den Schnitten;
- Fig. 12: eine schematische Darstellung der vertikalen Profilverringerung in Fig. 11.

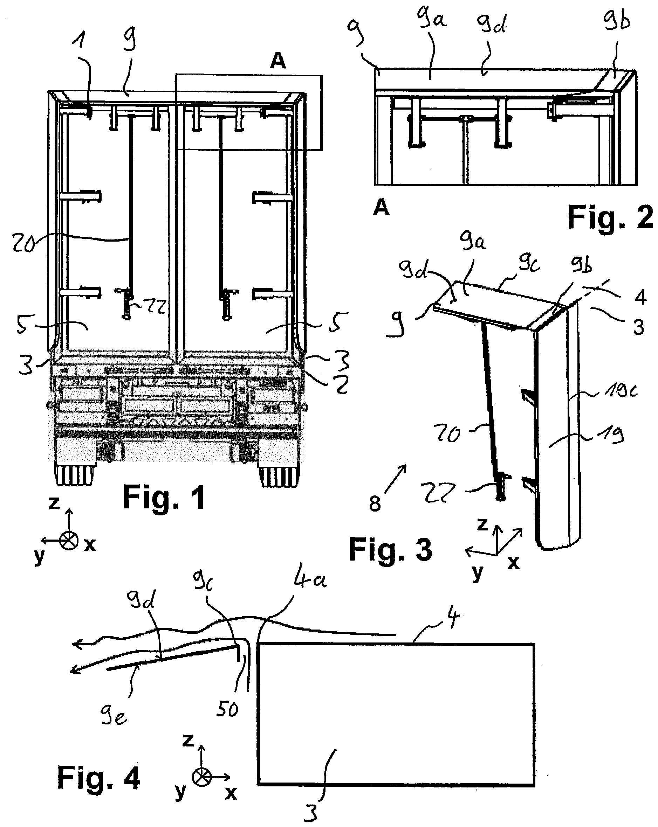

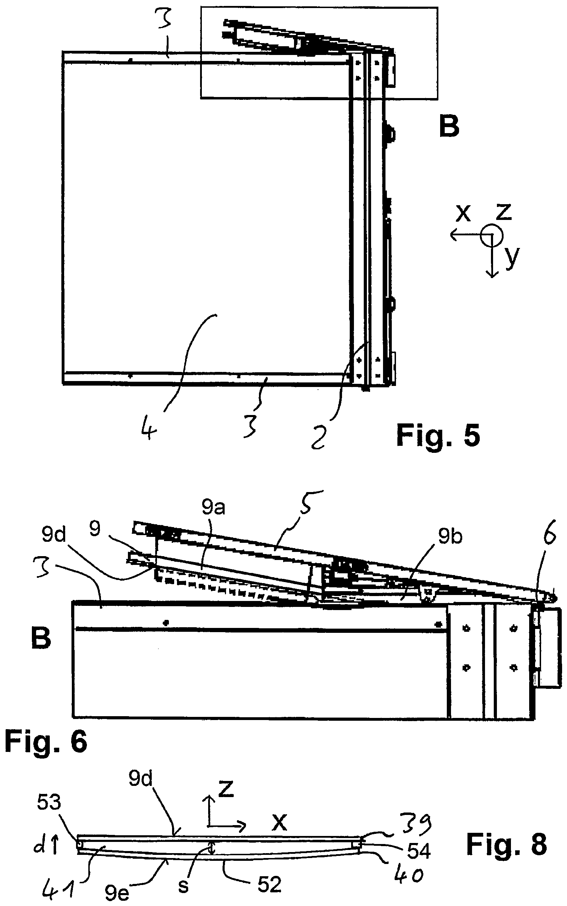

Ein Fahrzeug 1, insbesondere ein Lkw 1, weist gemäß Fig. 1 eine Fahrzeugstruktur 2, zwei Seitenwände 3, eine Dachfläche 4 und zwei von innen nach außen aufschwingende Hecktüren 5 auf. Die beiden Hecktüren 5 sind in ihren seitlich bzw. in Querrichtung y äußeren (lateral äußeren) Bereichen mit z. B. aus Fig. 6 ersichtlichen Scharnieren 6 an der Fahrzeugstruktur 2 angelenkt und können von der aus Fig. 1 ersichtlichen geschlossenen Position (Fahrposition) um etwa 250° nach außen und vorne aufgeschwenkt werden, um an den Seitenwänden 3 angelegt und arretiert bzw. verriegelt zu werden.

An jeder Hecktüre 5 ist eine Heckspoilereinrichtung 8 angebracht, die jeweils ein Dach-Luftleitelement 9 zur Verlängerung der Kontur der Dachfläche 4 nach hinten, d. h. in -x-Richtung, und eine Verstelleinrichtung 10 zum Verstellen des Dach-Luftleitelementes 9 zwischen der in Fig. 1 gezeigten Fahrstellung und einer heruntergeklappten Grundstellung aufweist. Weiterhin weist jede Heckspoilereinrichtung 8 vorzugsweise ein Seiten-Luftleitelement 19 auf.

Das Dach-Luftleitelement 9 dient somit zur aerodynamischen Konturverlängerung der Dachfläche 4, insbesondere mit nach hinten und unten abfallender Ausbildung; hierbei kann die Oberseite bzw. Luftleitfläche 9d des Dach-Luftleitelementes 9 in X-Richtung bzw. Längsrichtung insbesondere plan sein, es kann jedoch auch z. B. einen gewölbten Verlauf aufweisen.

Das Dach-Luftleitelement 9 weist einen - bezüglich der Querrichtung y - inneren Bereich 9a auf, an den sich lateral nach außen, d. h. zur zur Seitenwand 3 hin, jeweils ein äußerer Bereich 9b anschließt. Die beiden inneren Bereiche 9a der beiden Dach-Luftleitelemente 9 liegen somit zur Fahrzeugmitte hin aneinander, die äußeren Bereiche 9b zeigen zu der jeweiligen Seitenwand 3 hin.

In der aus Fig. 1, 2 und 3 ersichtlichen Fahrstellung ist das Dach- Luftleitelement 9 plan mit nach hinten geradlinig abfallendem Verlauf ausgebildet; seine geradlinige vordere Anlagekante 9c liegt somit an einer hinteren Dachkante 4a, die durch die Dachfläche 4 oder auch durch die Fahrzeugstruktur 2 gebildet sein kann, direkt an. Somit bildet sich nicht ein in Fig. 4 dargestelltes, bei herkömmlichen Systemen im Allgemeinen nachteilhafte Lücke bzw. Zwischenraum 50 zwischen dem Dach-Luftleitelement 9 und dem Fahrzeug 1, bzw. eine derartige Lücke wird durch eine Dichtung vermieden, sodass keine Rückströmung erfolgen kann

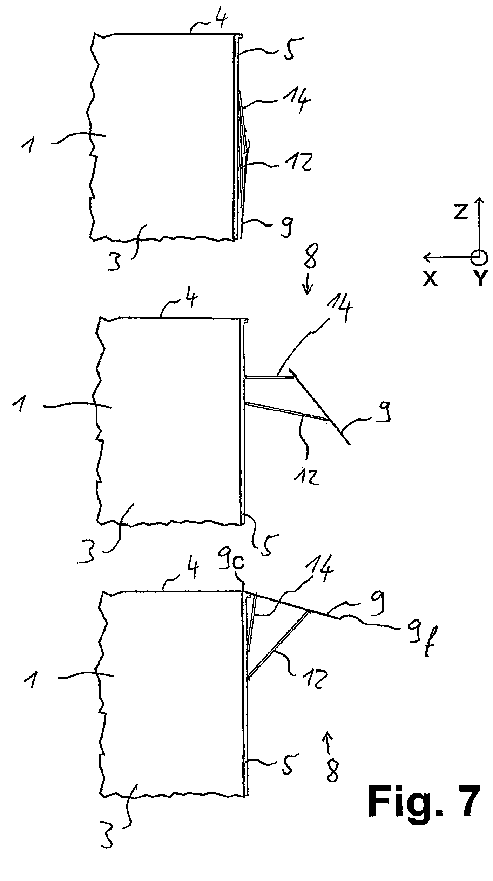

In der Grundstellung liegt das Dach-Luftleitelement 9 flach auf der Hecktüre 5 auf; die Verstellung erfolgt über eine Verstelleinrichtung 10 und kann unterschiedlich ausgebildet sein. Zum einen kann die Verstelleinrichtung 10 durch eine Schwenkachse am oberen Endbereich der Hecktüre 5 ausgebildet sein, so dass das Dach-Luftleitelement 9 zur Verstellung hoch- bzw. heruntergeklappt wird. Alternativ hierzu kann z. B. auch eine Viergelenk-Kopplung als Verstelleinrichtung 10 vorgesehen sein, die gemäß der schematischen Darstellung der Fig. 7 das Dach-Luftleitelement zwischen der oberen, an die Hecktüre 5 angelegten Grundstellung und der unteren, ausgefahrenen Fahrstellung in einem bogenförmigen Verlauf schwenkt, wobei gemäß der Ausführungsform der Fig. 7 die Verstelleinrichtung 10 somit eine lange Koppel 12 und eine kurze Koppel 14 (obere Koppel) aufweist, deren Abstand und Länge die Schwenkbahn sowie auch die Winkelstellung in der Fahrstellung gegenüber der Dachfläche 4 festlegen.

Das Dach-Luftleitelement 9 wird in seiner Fahrstellung durch eine erste Arretiereinrichtung 20 arretiert, die z. B. ein auch zur Bedienung und Verstellung dienender Zug-Druck-Stab 20 sein kann, der z. B. an die Verstelleinrichtung 10 gekoppelt ist und an der Hecktüre 5 durch eine Verriegelungseinrichtung 22 verriegelt wird, z. B. durch einen umlegbaren Hebel.

Die erste Arretiereinrichtung 20 kann bei der Ausführungsform der Fig. 7 mit der Viergelenk-Kopplung direkt an der langen Koppel/Schwinge 12 oder auch an der kurzen Koppel 14 ansetzen und durch Verstellung z. B. der unteren langen Koppel 12 das Dach-Luftleitelement 9 verstellen. Bei Ausbildung mit Schwenkachse kann die Arretiereinrichtung 20 direkt an der Unterseite des Dach-Luftleitelementes 9 oder einem zusätzlichen Hebel oder einer Schwinge angreifen.

Das Seiten-Luftleitelement 19 schließt mit seiner vorderen Kante 19c wiederum an einem hinteren Ende der Seitenwand 3 oder der Fahrzeugstruktur 2 ohne Zwischenraum, d. h. bündig, an. Das Seiten-Luftleitelement 19 ist über eine Seiten-Verstelleinrichtung 29 zwischen der in Fig. 1 bis 3 gezeigten ausgefahrenen Fahrstellung und einer eingeklappten Grundstellung verstellbar, wobei die Seiten-Verstelleinrichtung 29 entsprechend der Verstelleinrichtung 10 ausgebildet sein kann, d. h. entweder als einfache Schwenkachse oder als Viergelenk-Kopplung. Die Ausbildung als Schwenkachse ist weniger materialintensiv und somit grundsätzlich kostengünstiger; bei Ausbildung mit Viergelenk-Kopplung entsprechend Fig. 7 schwenkt das Seiten- Luftleitelement 19 weiter von der äußeren Kante und den Scharnieren 6 der Hecktüre 5 weg.

Die Verstellung des Seiten-Luftleitelementes 19 kann nach dessen Entriegelung von Hand erfolgen, da es in seinem unteren Bereich gut greifbar ist und weiterhin auch keine Verstellung gegen die Schwerkraft erfolgt.

Das Scharnier 6 der Hecktüre 5 kann gegenüber der Hecktüre 5 etwas nach vorne versetzt sein, d. h. im Bereich der Fahrzeugstruktur 2 in Längsrichtung x vor der Hecktüre 5 positioniert sein; durch eine derartige Ausbildung des Heckbereichs des Lkw 1 kann der Schwenkvorgang zum Öffnen der Hecktüre 5 verbessert werden.

Das Dach-Luftleitelement 9 ist in seinem äußeren Bereich 9b flexibel bzw. elastisch, so dass es in der Grundstellung ein nachfolgendes Vorschwenken der Hecktüre 5 gemäß Fig. 5 und 6 nach vorne für einen verbesserten Zugang zu einem Laderaum vor den Hecktüren 5 und zur Fixierung der Hecktüre 5 an der Seitenwand 3, nicht behindert. Das Dach- Luftleitelement 9 wird bei diesem Vorschwenkvorgang der Hecktüre 5 verformt und zwischen der Hecktüre 5 und der Seitenwand 3 aufgenommen. Hierbei deformiert insbesondere der äußere Bereich 9b, der zur Anlage an der Seitenwand kommt, wobei der äußere Bereich 9b zu der Hecktüre 5 hin gedrückt wird. Der innere Bereich 9a verläuft hierbei vorzugsweise weiterhin parallel zur Hecktüre 5.

Gemäß Fig. 8 ist das Dach-Luftleitelement 9 mehrschichtig ausgebildet, mit einer oberen Schicht 39, die somit die Leitfläche 9d ausbildet, und mindestens einer unteren Schicht 40; die untere Schicht 40 kann z. B. als Mehrschicht-Ausbildung oder mehrlagige Ausbildung ausgebildet sein. Die obere Schicht 39 ist in y-Erstreckung bzw. Quererstreckung bezüglich des Lkw 1 geradlinig und in x-Erstreckung, d. h. in Längsrichtung des Lkw 1 entsprechend der gewünschten Formgebung des Dach-Luftleitelementes ausgebildet, d.h. gemäß der gezeigten Ausführungsform auch in x-Richtung geradlinig, so dass die obere Schicht 39 hier eine plane bzw. ebene Ausbildung aufweist. Die untere Schicht 40 ist in x-Richtung bzw. Längsrichtung nichtplan, d. h. gewölbt; sie kann z. B. konkav bzw. mit einer Wölbung 52 ausgebildet sein oder auch wellenförmig mit mehreren Wölbungen 52.

Ein Spalt 41 zwischen den Schichten 39, 40 ist im Allgemeinen nicht abgedichtet, seine Spaltdicke s variiert in der Längsrichtung x.

Somit kann insbesondere eine Ausbildung gewählt werden, bei der die untere Schicht 40 und die obere Schicht 39 im vorgeklappten Zustand der Hecktüre 5,, d. h. bei reversibel deformierten Dach- Luftleitelement 9 parallel verlaufen; die Formgebung der unteren Schicht 40 kann somit vorteilhafterweise angepasst sein an die Deformation in der vorgeklappten Stellung.

Die untere Schicht 40 wirkt somit zum Versteifen und als Feder bzw. zur Vorspannung der oberen Schicht 39. Somit versteift sie die obere Schicht 39 durch den Zweischicht- bzw. Mehrschicht-Aufbau, und dient bei Deformation als Rückstellfeder. Auch ermöglicht der mehrschichtige Aufbau mit dem Spalt 42 zwischen der unteren Schicht 39 und der oberen Schicht 40 eine höhere Verformbarkeit bzw. größere Verformstrecken; insbesondere kann eine gute Verformbarkeit im äußeren Bereich 9b vorgesehen sein.

Das Seiten-Luftleitelement 19 kann entsprechend mehrschichtig ausgebildet sein.

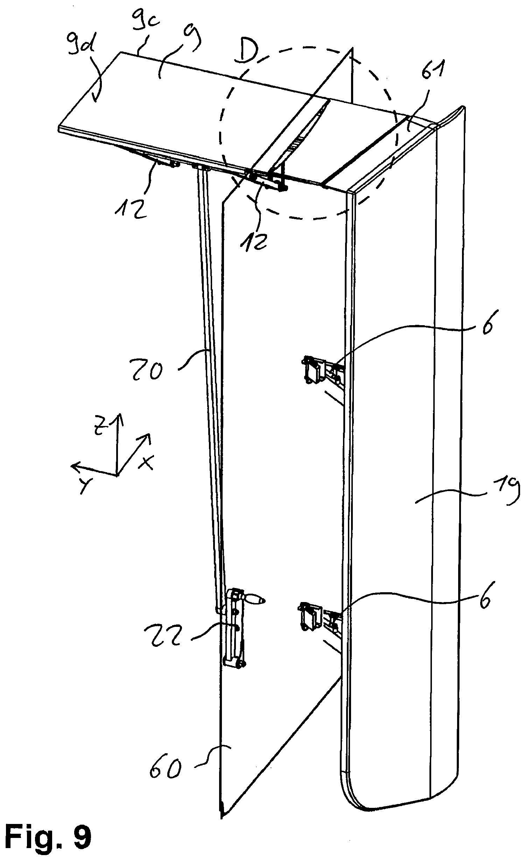

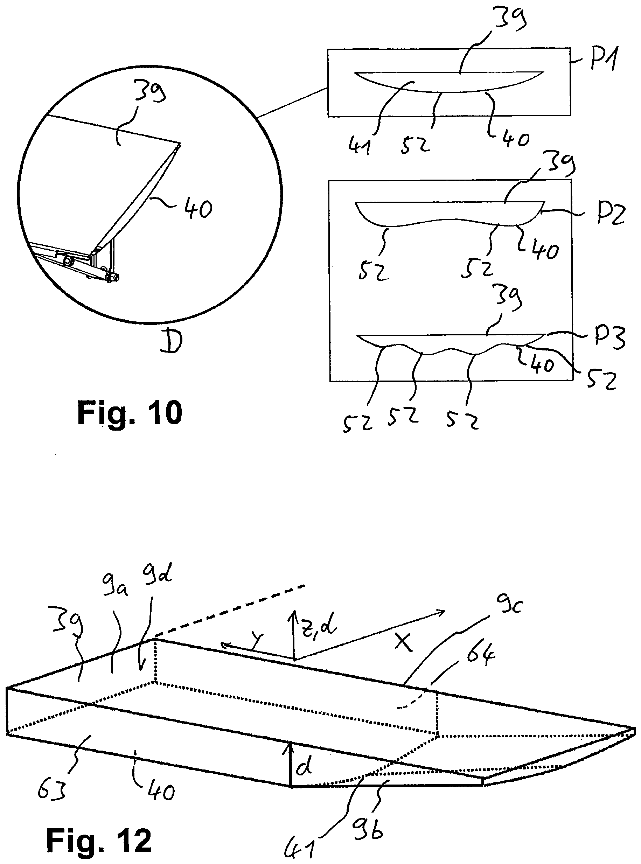

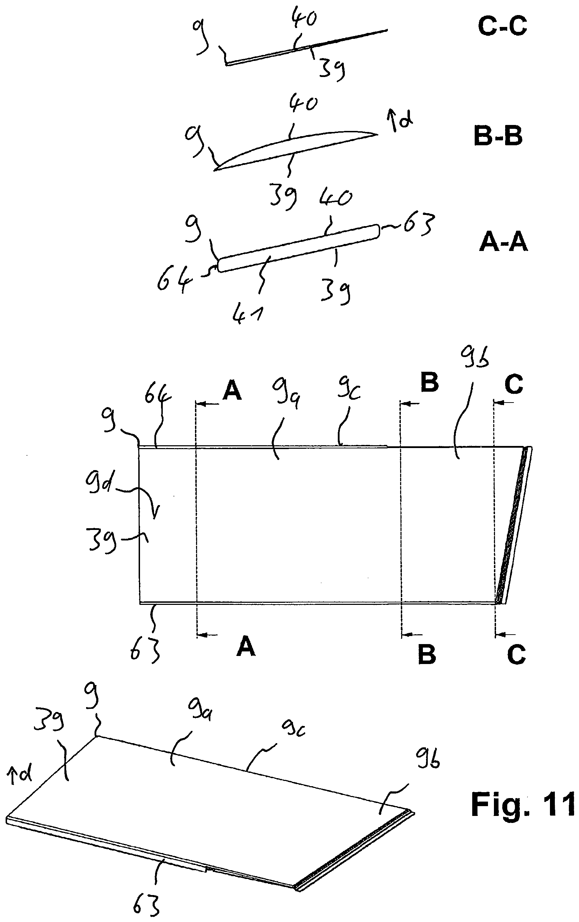

Fig. 9 zeigt eine vertikale Schnittebene 60, d.h. xz-Ebene, die als Knickebene für das Abknickverhalten des Dach-Luftleitelementes 9 relevant ist, wobei der kreisförmige Ausschnitt D in Fig. 10 detaillierter gezeigt ist. Diese Schnittebene entspricht dem Schnitt B-B in Fig. 11, wobei Fig. 11 drei Schnitte A-A, B-B und C-C zeigt. In Fig. 9 schließt sich rechts eine Dichtung 61 an, die insbesondere auch zur Anlage an dem Seiten-Luftleitelement 19 dient und für die Funktionalität hier nicht weiter relevant ist; die Dichtung 61 ist hierbei vorteilhafterweise am lateral äußeren Rand der oberen Schicht 39 befestigt und in Fig. 11 nicht weiter gezeigt.

Die obere Schicht 39 verläuft gemäß Fig. 9 bis 12 über ihre gesamte laterale y-Erstreckung und auch in x-Richtung plan. Im lateral inneren Bereich 9a sind die obere Schicht 39 und die untere Schicht 40 miteinander durch z. B. eine vordere Leiste 64 und eine hintere Leisten 63 miteinander verbunden, z. B. verklebt und/oder eingefasst bzw. formschlüssig aufgenommen. In dem lateral äußeren Bereich 9b sind die Schichten 39, 49 hingegen nicht miteinander verbunden. Die untere Schicht 40 verläuft im inneren Bereich 9a parallel zur oberen Schicht 39, in dem lateral äußeren Bereich 9b ist die untere Schicht 40 in Längsrichtung x gewölbt, z. B. gemäß dem Profil P1 in Fig. 10 mit einer Wölbung 52, d.h. konkav, oder auch wellenförmig gemäß Profil P2 mit zwei Wölbungen 52 oder gemäß Profil P3 mit vier Wölbungen 52, wobei sich die Wölbungen jeweils in Richtung der Dicke d, d.h. in der Fahrtstellung in vertikaler Richtung z und somit in der herabgeschwenkten Grundstellung in Längsrichtung x erstrecken.

In der Schnittebene B-B ist diese gewölbte Form somit gut zu erkennen; lateral, d.h. in y-Richtung nach außen verringert sich die Dicke d, d.h. das Dach- Luftleitelement 9 verjüngt sich nach außen hin, indem die untere Schicht 40 gemäß der schematischen Darstellung der Fig. 12 zu der oberen Schicht 39 hin verläuft.

Somit kann beim Vorklappen der Hecktüre 5 mit in Grundstellung angelegtem Dach-Luftleitelement 9 die untere Schicht 40 in der Klappebene 60, d.h. in dem Scharnierbereich, eine Verformung durchführen, insbesondere umklappen, wobei sie ihre Krümmungsrichtung ändert; derartige Änderungen sind z. B. aus gebogenen Metallbändern wie z. B. Maßbändern bekannt, die aufgrund ihrer Wölbung eine Steifigkeit besitzen und gegen diese Steifigkeit in einer Knicklinie bzw. Knickebene reversibel umgeklappt werden können. Da die untere Schicht 40 in der Klappebene 60 nicht mehr vorne und hinten eingefasst ist, kann sie beim Umknicken bzw. Umklappen sich in ihrer Längserstreckung ausdehnen, d.h. die Formveränderung durch Umklappen aus der gewölbten Form heraus kompensieren.

### Bezugszeichenliste

- 1: Fahrzeug, Lkw
- 2: Fahrzeugstruktur
- 3: Seitenwand
- 4: Dachfläche
- 4a: hintere Dachkante
- 5: Hecktür

- 6: Scharnier
- 8: Heckspoilereinrichtung
- 9: Dach-Luftleitelement
- 10: Verstelleinrichtung zum Verstellen des Dach-Luftleitelementes 9
- 19: Seiten-Luftleitelement
- 9a: innerer Bereich
- 9b: äußerer Bereich
- 9c: vordere Anlagekante
- 9d: Leitfläche

- 12: lange Koppel
- 14: kurze Koppel

- 20: erste Arretiereinrichtung, Zug-Druck-Stab
- 22: Verriegelungseinrichtung
- 29: Seiten-Verstelleinrichtung für Seiten-Luftleitelement 19

- 39: obere Schicht
- 40: untere Schicht
- 41: Spalt
- 50: Gap bzw. Zwischenraum
- 52: Wölbung

- 60: Klappebene

- 64: vordere Leiste
- 63: hintere Leiste

- d: Dicke
- s: Spaltdicke

- X: Längsrichtung
- Y: laterale Richtung, Querrichtung
- Z: vertikale Richtung

## Patentansprüche

1. Heckspoilereinrichtung (8) für ein Fahrzeug (1), das mindestens eine Hecktür (5) und als Außenflächen Seitenwände (3) und eine Dachfläche (4) aufweist,
wobei die Heckspoilereinrichtung (8) mindestens aufweist:
ein Luftleitelement (9, 19), das zwischen einer eingefahrenen Grundstellung und einer Fahrstellung verstellbar ist und eine Leitfläche (9d) zur aerodynamischen Verlängerung einer Außenfläche (4, 3) des in der Fahrstellung aufweist,
wobei das Luftleitelement (9) eine sich in einer lateralen Richtung (y) erstreckende vordere Anlagekante (9c) zum Anschluss oder zur Anlage an der Außenfläche (4) des Fahrzeugs (1) in der Fahrstellung aufweist,
**dadurch gekennzeichnet dass**
die Heckspoilereinrichtung (8) vollständig an der Hecktüre (5) montierbar ist,
das Luftleitelement (9, 19) mehrlagig mit mindestens einer die Leitfläche (9d) aufweisenden oberen Schicht (39) und einer unteren Schicht (40) ausgebildet ist,
das Luftleitelement (9, 19) in einem in der lateralen Richtung (y) lateral äußeren Bereich (9b) elastisch reversibel verformbar ist zur Positionierung zwischen der nach vorne geschwenkten Hecktüre (5) und einer Seitenwand (3) des Fahrzeugs (1), und
die untere Schicht (40) in dem lateral äußeren Bereich (9b) einen gewölbten oder bogenförmigen Verlauf aufweist, wobei die untere Schicht (40) in einem lateral inneren Bereich (9a) im wesentlichen parallel zur oberen Schicht (39) verläuft.

2. Heckspoilereinrichtung (8) nach Anspruch 1 oder 2, **dadurch gekennzeichnet, dass** die untere Schicht (40) in dem lateral äußeren Bereich (9b) einen in Längsrichtung (x) gewölbten oder bogenförmigen Verlauf aufweist.

3. Heckspoilereinrichtung (8) nach einem der vorherigen Ansprüche, **dadurch gekennzeichnet, dass** die obere Schicht (39) und die untere Schicht (40) jeweils als in der lateralen Richtung (y) und der von der vorderen Anlagekante (9c) zur hinteren Kante des Luftleitelementes (9, 19) verlaufenden Längsrichtung (x) als flächiges, durchgängiges Material ausgebildet sind.

4. Heckspoilereinrichtung (8) nach einem der vorherigen Ansprüche, **dadurch gekennzeichnet, dass** in dem lateral äußeren Bereich (9b) zwischen der unteren Schicht (40) und der oberen Schicht (39) ein Spalt (41) ausgebildet ist, dessen Spaltbreite in der lateralen Richtung (y) variiert.

5. Heckspoilereinrichtung (8) nach Anspruch 5, **dadurch gekennzeichnet, dass** der Spalt (41) sich lateral nach außen verringert und/oder eine Dicke (d) des Luftleitelementes (9) als Abstand zwischen der unteren Schicht (40) und der oberen Schicht (39) lateral nach außen abnimmt.

6. Heckspoilereinrichtung (8) nach einem der vorherigen Ansprüche, **dadurch gekennzeichnet, dass** der Spalt (41) nicht abgedichtet ist und mit Luft gefüllt ist.

7. Heckspoilereinrichtung (8) nach einem der vorherigen Ansprüche, **dadurch gekennzeichnet, dass** die untere Schicht (40) und die obere Schicht (39) in dem lateral inneren Bereich (9a) in ihrem in Längsrichtung (x) vorderen und hinteren Ende in Verbindungsmitteln (63, 64), z. B. Leisten, direkt oder indirekt miteinander verbunden sind.

8. Heckspoilereinrichtung (8) nach Anspruch 8, **dadurch gekennzeichnet, dass** die Verbindungsmittel (63, 64) sich nur in dem lateral inneren Bereich (9a) erstrecken.

9. Heckspoilereinrichtung (8) nach einem der vorherigen Ansprüche, **dadurch gekennzeichnet, dass** die untere Schicht (40) bogenförmig oder konkav ausgebildet ist und in genau einer Wölbung (52) von der oberen Schicht (39) wegbaucht.

10. Heckspoilereinrichtung (8) nach einem der Ansprüche 1 bis 9, **dadurch gekennzeichnet, dass** die untere Schicht (40) wellenförmig ausgebildet ist und in mehreren Wölbungen (52) von der oberen Schicht (39) wegbaucht.

11. Heckspoilereinrichtung (8) nach einem der vorherigen Ansprüche, **dadurch gekennzeichnet, dass** die untere Schicht (40) als Federeinrichtung zur elastischen Rückverstellung der oberen Schicht (39) ausgebildet ist.

12. Heckspoilereinrichtung (8) nach einem der vorherigen Ansprüche, **dadurch gekennzeichnet, dass** bei dem Deformieren des äußeren Bereichs (9b) die obere Schicht (39) plan abknickt und die untere Schicht (40) unter Änderung ihrer Wölbung und unter Ausbildung einer Federrückstellkraft abknickt.

13. Heckspoilereinrichtung (8) nach einem der vorherigen Ansprüche, **dadurch gekennzeichnet, dass** sie in ihrer Grundstellung bei vorgeschwenkter, an einer Seitenwand (3) des Fahrzeugs (1) arretierbarer Hecktüre (5) zwischen der Hecktüre (5) und der Seitenwand (3) untere Deformation des äußeren Bereichs (9b) des Luftleitelementes (9, 19) aufnehmbar ist.

14. 15. Heckspoilereinrichtung (8) nach einem der vorherigen Ansprüche, **dadurch gekennzeichnet, dass** das Luftleitelement (9) ein Dach- Luftleitelement (9) ist, das von seiner oberen Fahrstellung nach unten in seine Grundstellung zur Anlage an oder auf der Hecktüre (5) verstellbar ist, wobei die laterale Richtung die Fahrzeug-Querrichtung (y) ist und der in Querrichtung (y) äußere Bereich (9b in der Grundstellung bei Vorklappen der Hecktüre (5) nach vorne elastisch reversibel verformbar ist.

15. Heckspoilereinrichtung (8) nach einem der vorherigen Ansprüche, **dadurch gekennzeichnet, dass** das Luftleitelement (9) in dem äußeren Bereich (9b) relativ zu dem inneren Bereich (9a) zu einer der Leitfläche (9d) entgegen gesetzten Unterseite (9e) hin einknickbar ist, zur Anlage an einer Seitenwand (3) des Fahrzeugs (1) bei nach vorne geschwenkten Hecktüre (5).

16. Heckspoilereinrichtung (8) nach einem der vorherigen Ansprüche, **dadurch gekennzeichnet, dass** sie eine Verstelleinrichtung (10, 29) zum Verstellen des Luftleitelementes (9, 19) zwischen der Grundstellung und der Fahrstellung aufweist.

17. Heckspoilereinrichtung (8) nach Anspruch 17, **dadurch gekennzeichnet, dass** die Verstelleinrichtung (10) als Zwangsführung mit lediglich einem Freiheitsgrad zum Verstellen des Dach-Luftleitelementes (9) zwischen der Grundstellung und der Fahrstellung ausgebildet ist.

18. Heckspoilereinrichtung (8) nach Anspruch 17, **dadurch gekennzeichnet, dass** die Verstelleinrichtung (10) als Viergelenk-Getriebe mit vier Gelenken oder Gelenkachsen (12a, 12b, 14a, 14b), mindestens einer großen Schwinge (12) mit einer größeren Länge (L1, L3) und mindestens einer kleineren Schwinge (14) mit einer kleineren Länge (L2, L4) ausgebildet ist,
wobei die große Schwinge (12) und die kleine Schwinge (14) jeweils ein vorderes Gelenk (12a, 14a) zur Anbindung an einer Hecktüre (5) des Fahrzeugs (1) und ein hinteres Gelenk (12b, 14b) zur Anbindung an dem Luftleitelement (9, 19) aufweist.

19. Heckspoilereinrichtung (8) nach einem der vorherigen Ansprüche, **dadurch gekennzeichnet, dass** das Luftleitelement (9) in der Grundstellung flach auf der Hecktüre (5) und/oder der flach auf der Hecktüre (5) aufliegenden Verstelleinrichtung (10) aufliegt.

20. Fahrzeug mit zwei Seitenwänden (3), einer Dachfläche (4) und nach zwei hinten zu öffnenden und nach Öffnung nach vorne schwenkbaren Hecktüren (5) zur Anlage und/oder Arretierung an den Seitenwänden, wobei an jeder Hecktüre (5) eine Heckspoilereinrichtung (8) nach einem der vorherigen Ansprüche befestigt ist.

## Claims

1. Rear spoiler device (8) for a vehicle (1) which has at least one rear door (5) and, as the external surfaces, side walls (3) and a roof surface (4), wherein the rear spoiler device (8) has at least:
one air-guiding element (9, 19) which is adjustable between a retracted basic position and a travel position and a guiding surface (9d) to extend an external surface (4, 3) of the aerodynamically in the travel position,
wherein the air-guiding element (9) has a front abutment edge (9c) extending in a lateral direction (y) for attachment or abutment to the external surface (4) of the vehicle (1) in the travel position,
**characterized in that**
the rear spoiler device (8) can be completely fitted to the rear door (5),
the air-guiding element (9, 19) is configured with a multi-layer design with at least one upper layer (39) exhibiting the guiding surface (9d) and a lower layer (40),
the air-guiding element (9, 19) is elastically reversibly deformable in a region (9b) which is external in the lateral direction (y) for positioning between the rear door (5) pivoted forward and a side wall (3) of the vehicle (1), and
the lower layer (40) has a curved or arcuate profile in the laterally external region (9b), wherein the lower layer (40) in a laterally internal region (9a) runs substantially parallel to the upper layer (39) .

2. Rear spoiler device (8) according to Claim 1 or 2, **characterized in that** the lower layer (40) in the laterally external region (9b) has a curved or arcuate profile in the longitudinal direction (x).

3. Rear spoiler device (8) according to one of the preceding claims, **characterized in that** the upper layer (39) and the lower layer (40) are each configured in the form of as a planar, continuous material in the lateral direction (y) and the longitudinal direction (x) running from the front abutment edge (9c) to the rear edge of the air-guiding element (9, 19).

4. Rear spoiler device (8) according to one of the preceding claims, **characterized in that** a gap (41) is formed in the laterally external region (9b) between the lower layer (40) and the upper layer (39), the width whereof varies in the lateral direction (y).

5. Rear spoiler device (8) according to Claim 5, **characterized in that** the gap (41) tapers in the outward lateral direction and/or a thickness (d) of the air-guiding element (9) as the distance between the lower layer (40) and the upper layer (39) decreases in the outward lateral direction.

6. Rear spoiler device (8) according to one of the preceding claims, **characterized in that** the gap (41) is not sealed and is filled with air.

7. Rear spoiler device (8) according to one of the preceding claims, **characterized in that** the lower layer (40) and the upper layer (39) are connected to one another directly or indirectly in the laterally internal region (9a) in their front and rear end in the longitudinal direction (x) in connecting means (63, 64), for example strips.

8. Rear spoiler device (8) according to claim 8, **characterized in that** the connecting means (63, 64) only extend in the laterally internal region (9a).

9. Rear spoiler device (8) according to one of the preceding claims, **characterized in that** the lower layer (40) is of arcuate or concave design and in precisely one curvature (52) bulges away from the upper layer (39).

10. Rear spoiler device (8) according to one of Claims 1 to 9, **characterized in that** the lower layer (40) has a wavelike configuration and bulges away from the upper layer (39) in a plurality of curvatures (52) .

11. Rear spoiler device (8) according to one of the preceding claims, **characterized in that** the lower layer (40) is configured as a spring device for the elastic resetting of the upper layer (39).

12. Rear spoiler device (8) according to one of the preceding claims, **characterized in that** during the deformation of the external region (9b), the upper layer (39) bends down in a planar manner and the lower layer (40) bends down, thereby altering its curvature and producing a spring resetting force.

13. Rear spoiler device (8) according to one of the preceding claims, **characterized in that** it can be received between the rear door (5) and the side wall (3) in its basic position with the rear door (5) pivoted forward, lockable to a side wall (3) of the vehicle (1), lower deformation of the external region (9b) of the air-guiding element (9, 19).

14. Rear spoiler device (8) according to one of the preceding claims, **characterized in that** the air-guiding element (9) is a roof air-guiding element (9) which is adjustable from its upper travel position down into its basic position for abutment against or on the rear door (5), wherein the lateral direction is the vehicle transverse direction (y) and the external region (9b) in the transverse direction (y) is elastically reversibly deformable in a forward direction in the basic position when the rear door (5) is folded forward.

15. Rear spoiler device (8) according to one of the preceding claims, **characterized in that** the air-guiding element (9) can be bent in the external region (9b) relative to the internal region (9a) to an underside (9e) opposite the guiding surface (9d), for abutment against a side wall (3) of the vehicle (1) when the rear door (5) is pivoted forward.

16. Rear spoiler device (8) according to one of the preceding claims, **characterized in that** it has an adjustment device (10, 29) for adjusting the air-guiding element (9, 19) between the basic position and the travel position.

17. Rear spoiler device (8) according to Claim 17, **characterized in that** the adjustment device (10) is configured as a forced guide with only one degree of freedom for the adjustment of the roof air-guiding element (9) between the basic position and the travel position.

18. Rear spoiler device (8) according to Claim 17, **characterized in that** the adjustment device (10) is configured as a four-link coupling with four links or joint axes (12a, 12b, 14a, 14b), at least one large swing arm (12) with a longer length (L1, L3) and at least one smaller swing arm (14) with a shorter length (L2, L4), wherein the large swing arm (12) and the small swing arm (14) each have a front link (12a, 14a) for attaching to a rear door (5) of the vehicle (1) and a rear link (12b, 14b) for attaching to the air-guiding element (9, 19).

19. Rear spoiler device (8) according to one of the preceding claims, **characterized in that** the air-guiding element (9) lies flat on the rear door (5) in the basic position and/or on the adjustment device (10) lying flat on the rear door (5).

20. Vehicle having two side walls (3), a roof surface (4) and towards two rear doors (5) which open backwards and can be pivoted forwards after opening for abutment and/or locking to the side walls, wherein a rear spoiler device (8) according to one of the preceding claims is fastened to each rear door (5).

## Revendications

1. Dispositif de becquet arrière (8) pour un véhicule (1) qui présente au moins une porte arrière (5) et, en tant que surfaces extérieures, des parois latérales (3) et une surface de toit (4),
le dispositif de becquet arrière (8) présentant au moins :
un élément de guidage d'air (9, 19) qui peut être réglé entre une position de base rentrée et une position de conduite et présente une surface de guidage (9d) pour prolonger de manière aérodynamique une surface extérieure (4, 3) du dans la position de conduite,
l'élément de guidage d'air (9) présentant une arête d'appui avant (9c) s'étendant dans une direction latérale (y) pour le raccordement ou pour l'appui contre la surface extérieure (4) du véhicule (1) dans la position de conduite,
**caractérisé en ce que**
le dispositif de becquet arrière (8) peut être monté complètement sur la porte arrière (5),
l'élément de guidage d'air (9, 19) est réalisé avec plusieurs couches, avec au moins une couche supérieure (39) présentant la surface de guidage (9d) et une couche inférieure (40),
l'élément de guidage d'air (9, 19) peut être déformé de manière élastiquement réversible dans une région latéralement extérieure (9b) dans la direction latérale (y) pour le positionnement entre la porte arrière (5) pivotée vers l'avant et une paroi latérale (3) du véhicule (1), et
la couche inférieure (40) présentant, dans la région latéralement extérieure (9b), une allure courbée ou en forme d'arc, la couche inférieure (40) s'étendant dans une région latéralement intérieure (9a) essentiellement parallèlement à la couche supérieure (39).

2. Dispositif de becquet arrière (8) selon la revendication 1 ou 2, **caractérisé en ce que** la couche inférieure (40) présente, dans la région latéralement extérieure (9b), une allure courbée ou en forme d'arc dans la direction longitudinale (x) .

3. Dispositif de becquet arrière (8) selon l'une quelconque des revendications précédentes, **caractérisé en ce que** la couche supérieure (39) et la couche inférieure (40) sont à chaque fois réalisées sous la forme en tant que matériau continu plat dans la direction latérale (y) et dans la direction longitudinale (x) s'étendant depuis l'arête d'appui avant (9c) jusqu'à l'arête arrière de l'élément de guidage d'air (9, 19).

4. Dispositif de becquet arrière (8) selon l'une quelconque des revendications précédentes, **caractérisé en ce qu'**une fente (41) est réalisée dans la région latéralement extérieure (9b) entre la couche inférieure (40) et la couche supérieure (39), dont la largeur de fente varie dans la direction latérale (y).

5. Dispositif de becquet arrière (8) selon la revendication 5, **caractérisé en ce que** la fente (41) se rétrécit latéralement vers l'extérieur et/ou une épaisseur (d) de l'élément de guidage d'air (9) diminue latéralement vers l'extérieur en tant que distance entre la couche inférieure (40) et la couche supérieure (39).

6. Dispositif de becquet arrière (8) selon l'une quelconque des revendications précédentes, **caractérisé en ce que** la fente (41) n'est pas étanchéifiée et est remplie d'air.

7. Dispositif de becquet arrière (8) selon l'une quelconque des revendications précédentes, **caractérisé en ce que** la couche inférieure (40) et la couche supérieure (39) sont connectées directement ou indirectement l'une à l'autre dans la région latéralement intérieure (9a) dans leur extrémité avant et arrière dans la direction longitudinale (x) dans des moyens de connexion (63, 64), par exemple des nervures.

8. Dispositif de becquet arrière (8) selon la revendication 8, **caractérisé en ce que** les moyens de connexion (63, 64) s'étendent seulement dans la région latéralement intérieure (9a).

9. Dispositif de becquet arrière (8) selon l'une quelconque des revendications précédentes, **caractérisé en ce que** la couche inférieure (40) est réalisée en forme d'arc ou sous forme concave et est bombée dans exactement une courbure (52) à l'écart de la couche supérieure (39).

10. Dispositif de becquet arrière (8) selon l'une quelconque des revendications 1 à 9, **caractérisé en ce que** la couche inférieure (40) est réalisée sous forme ondulée et est bombée dans plusieurs courbures (52) à l'écart de la couche supérieure (39) .

11. Dispositif de becquet arrière (8) selon l'une quelconque des revendications précédentes, **caractérisé en ce que** la couche inférieure (40) est réalisée sous forme de dispositif à ressort pour le rappel élastique de la couche supérieure (39) .

12. Dispositif de becquet arrière (8) selon l'une quelconque des revendications précédentes, **caractérisé en ce que** lors de la déformation de la région extérieure (9b), la couche supérieure (39) plie à plat et la couche inférieure (40) plie en faisant varier sa courbure et en créant une force de rappel à ressort.

13. Dispositif de becquet arrière (8) selon l'une quelconque des revendications précédentes, **caractérisé en ce qu'**il peut être reçue entre la porte arrière (5) et la paroi latérale (3), dans sa position de base, lorsque la porte arrière (5) est pivotée vers l'avant, de manière à pouvoir être bloquée contre une paroi latérale (3) du véhicule (1) déformation inférieure de la région extérieure (9b) de l'élément de guidage d'air (9, 19) .

14. Dispositif de becquet arrière (8) selon l'une quelconque des revendications précédentes, **caractérisé en ce que** l'élément de guidage d'air (9) est un élément de guidage d'air de toit (9) qui peut être réglé de sa position de conduite supérieure vers le bas dans sa position de base pour s'appliquer contre ou sur la porte arrière (5), la direction latérale étant la direction transversale du véhicule (y) et la région extérieure (9b) dans la direction transversale (y) pouvant être déformée de manière réversible élastiquement vers l'avant dans la position de base lorsque la porte arrière (5) est rabattue vers l'avant.

15. Dispositif de becquet arrière (8) selon l'une quelconque des revendications précédentes, **caractérisé en ce que** l'élément de guidage d'air (9) peut être plié dans la région extérieure (9b) par rapport à la région intérieure (9a) vers un côté inférieur (9e) opposé à la surface de guidage (9d), en vue de l'application contre une paroi latérale (3) du véhicule (1) lorsque la porte arrière (5) est pivotée vers l'avant.

16. Dispositif de becquet arrière (8) selon l'une quelconque des revendications précédentes, **caractérisé en ce qu'**il présente un dispositif de réglage (10, 29) pour le réglage de l'élément de guidage d'air (9, 19) entre la position de base et la position de conduite.

17. Dispositif de becquet arrière (8) selon la revendication 17, **caractérisé en ce que** le dispositif de réglage (10) est réalisé sous forme de guidage forcé avec seulement un degré de liberté pour le réglage de l'élément de guidage d'air de toit (9) entre la position de base et la position de conduite.

18. Dispositif de becquet arrière (8) selon la revendication 17, **caractérisé en ce que** le dispositif de réglage (10) est réalisé sous forme de mécanisme à quadrilatère articulé avec quatre articulations ou axes d'articulation (12a, 12b, 14a, 14b), au moins un gros bras oscillant (12) de plus grande longueur (L1, L3) et au moins un plus petit bras oscillant (14) de plus petite longueur (L2, L4),
le gros bras oscillant (12) et le petit bras oscillant (14) présentant chacun une articulation avant (12a, 14a) pour le raccordement à une porte arrière (5) du véhicule (1) et une articulation arrière (12b, 14b) pour le raccordement à l'élément de guidage d'air (9, 19).

19. Dispositif de becquet arrière (8) selon l'une quelconque des revendications précédentes, **caractérisé en ce que** l'élément de guidage d'air (9), dans la position de base, repose à plat sur la porte arrière (5) et/ou sur le dispositif de réglage (10) reposant à plat sur la porte arrière (5) .

20. Véhicule comprenant deux parois latérales (3), une surface de toit (4) et vers deux portes arrière (5) devant être ouvertes à l'arrière et pouvant être pivotées vers l'avant après l'ouverture, destinées à s'appliquer et/ou à se bloquer contre les parois latérales, un dispositif de becquet arrière (8) selon l'une quelconque des revendications précédentes étant fixé à chaque porte arrière (5).
